(19) Europäisches Patentamt

European Patent Office

Office européen des brevets

(11) EP 0 696 102 B1

(12) EUROPÄISCHE PATENTSCHRIFT

(45) Veröffentlichungstag und Bekanntmachung des Hinweises auf die Patenterteilung:
03.12.1997 Patentblatt 1997/49

(51) Int Cl.⁶: **H02M 3/335**

(21) Anmeldenummer: 94111983.6

(22) Anmeldetag: 01.08.1994

(54) **Durchflussumrichter mit einen weiteren Ausgangskreis**

Forward converter with an auxiliary output circuit

Convertisseur direct avec une circuit de sortie auxiliaire

(84) Benannte Vertragsstaaten:
AT BE CH DE ES FR GB IT LI NL PT SE

(43) Veröffentlichungstag der Anmeldung:
07.02.1996 Patentblatt 1996/06

(73) Patentinhaber: SIEMENS AKTIENGESELLSCHAFT
80333 München (DE)

(72) Erfinder:
• Kramer, Karl-Heinz
D-82515 Wolfratshausen (DE)
• Weidinger, Marc, Dipl.-Phys.
D-81669 München (DE)

(56) Entgegenhaltungen:
DE-A- 3 912 849       DE-A- 4 021 385
DE-A- 4 118 918

• JOACHIM WÜSTEHUBE 'Schaltnetzteile: Grundlagen, Entwurf, Schaltungsbeispiele' 1982 , EXPERT VERLAG , WüRTT

**Beschreibung**

Die Erfindung bezieht sich auf einen wie im Oberbegriff des Patentanspruchs 1 angegebenen Durchflußumrichter.

Ein derartiger Durchflußumrichter ist bereits aus dem Buch von Joachim Wüstehube: "Schaltnetzteile: Grundlagen, Entwurf, Schaltungsbeispiele", expert-verlag, 1982, Seite 474 bis 483 bekannt.

Der bekannte Durchflußumrichter ist Teil eines Schaltreglers, der drei Sperrumrichter- und einen Durchflußumrichter-Ausgangskreis aufweist. Im primärseitigen Hauptstromkreis ist ein Leistungsschalter vorgesehen, der von einem der Sperrumrichter-Ausgangskreise im Sinne einer konstanten Sperrumrichter-Ausgangsspannung gesteuert wird. Der Durchflußumrichter-Ausgangskreis enthält einen Nachregler. Dieser Nachregler benötigt eine Versorgungsspannung, die größer als die Ausgangsspannung des Durchflußumrichter-Ausgangskreises ist. Diese Versorgungsspannung wird mit Hilfe eines der SperrumrichterAusgangskreise erzeugt. Der betreffende Ausgangskreis ist an eine eigene Sekundärwicklung angeschlossen, so daß sich die Versorgungsspannung mit der gewünschten Polarität an den Durchflußumrichter-Ausgangskreis anschließen läßt.

Ferner ist aus der DE 40 21 385 C2, Fig. 3 bereits ein Sperrumrichter bekannt, der einen zusätzlichen Durchflußumrichter-Ausgangskreis aufweist. Die Ausgangsspannung des Sperrumrichters wird mit Hilfe eines im primärseitigen Hauptstromkreis angeordneten Leistungsschalters auf einen konstanten Wert geregelt. Im Durchflußumrichter-Ausgangskreis ist ein Nachregler vorgesehen. Die für den Nachregler benötigte Versorgungsspannung wird mit Hilfe einer Gleichrichterschaltung gewonnen. Diese Gleichrichterschaltung richtet die in der Sperrphase des Durchflußumrichter-Ausgangskreises an der Gleichrichterdiode liegende Spannung gleich. Die so gewonnene Versorgungsspannung ist der Ausgangsspannung des Durchflußumrichter-Ausgangskreises entgegengesetzt gerichtet.

Ferner ist aus Roland Köstner und Albrecht Möschwitzer: "Elektronische Schaltungstechnik", Dr. Alfred Hüthig Verlag Heidelberg, 1987, Seite 42 bis 45 bereits eine Schaltung zur Spannungsverdopplung bekannt, mit deren Hilfe aus einer Wechselspannung eine Gleichspannung gewonnen wird, die gleich dem doppelten Spitzenwert der Wechselspannung ist. Bei dieser einstufigen Kaskadenschaltung ist an die Wechselspannungsquelle über eine Diode ein Kondensator angeschlossen. Der Verbindungspunkt zwischen Diode und Kondensator ist über eine weitere Diode an einen weiteren Kondensator geführt, an dem die doppelte Spitzenspannung zur Verfügung steht.

Aufgabe der Erfindung ist es, einen primär getakteten Durchflußumrichter mit geregelter Ausgangsspannung derart auszubilden, daß eine Hilfsspannung von der Polarität der Ausgangsspannung zur Verfügung steht, ohne daß dabei eine zusätzliche Sekundärwicklung am Übertrager erforderlich ist. Insbesondere soll die Hilfsspannung möglichst unabhängig von Änderungen der Eingangsspannung sein.

Überlegungen im Rahmen der Erfindung haben ergeben, daß bei einem Durchflußumrichter, der einen Abmagnetisierungs-Schwingkreis aufweist, während der Sperrphase am Eingang des ausgangsseitigen Hauptstromkreises eine Halbwelle einer Sinusspannung zur Verfügung steht, deren Amplitude praktisch unabhängig von der Eingangsspannung ist und daß sich diese Spannung mit vergleichsweise geringem Aufwand zur Ausgangsspannung des Durchflußumrichters addieren läßt.

Gemäß der Erfindung wird der Durchflußumrichter zur Lösung der gestellten Aufgabe in der im kennzeichnenden Teil des Patentanspruchs 1 angegebenen Weise ausgebildet. Der weitere Ausgangskreis ähnelt formal der bekannten Schaltung zur Spannungsverdopplung. Die Gleichrichterdiode des sekundärseitigen Hauptstromkreises bewirkt jedoch, daß bei leitender Gleichrichterdiode die zuvor in der Abmagnetisierungsphase gewonnene Gleichspannung auf die Ausgangsspannung des Durchflußumrichters aufgesetzt wird.

Durch die erfindungsgemäßen Maßnahmen ergibt sich in vorteilhafter Weise ein Durchflußumrichter, bei dem aus ein und derselben Sekundärspannung des Übertragers mit besonders geringem Aufwand und großer Zuverlässigkeit sowohl eine vergleichsweise kleine geregelte Ausgangsspannung für einen relativ großen Laststrom als auch eine demgegenüber größere, von der Eingangsspannung weitgehend unabhängige Hilfsspannung für einen vergleichsweise kleinen Strombedarf erzeugt wird.

Vorteilhafte Ausgestaltungen der Erfindung gehen aus den abhängigen Ansprüchen 2 bis 10 hervor.

Die Erfindung wird anhand der in den Figuren dargestellten Ausführungsbeispiele näher erläutert.

Es zeigen

Fig. 1     einen Durchflußumrichter mit einem SperrrumrichterAusgangskreis zur Erzeugung einer Versorgungsspannung für eine Regelschaltung,

Fig. 2     einen Durchflußumrichter mit einer Stabilisierungsschaltung im Sperrumrichter-Ausgangskreis und

Fig. 3     ein Spannungsdiagramm für einen üblichen Durchflußumrichter und

Fig. 4     ein Spannungsdiagramm für den Durchflußumrichter nach Fig. 1 oder 2.

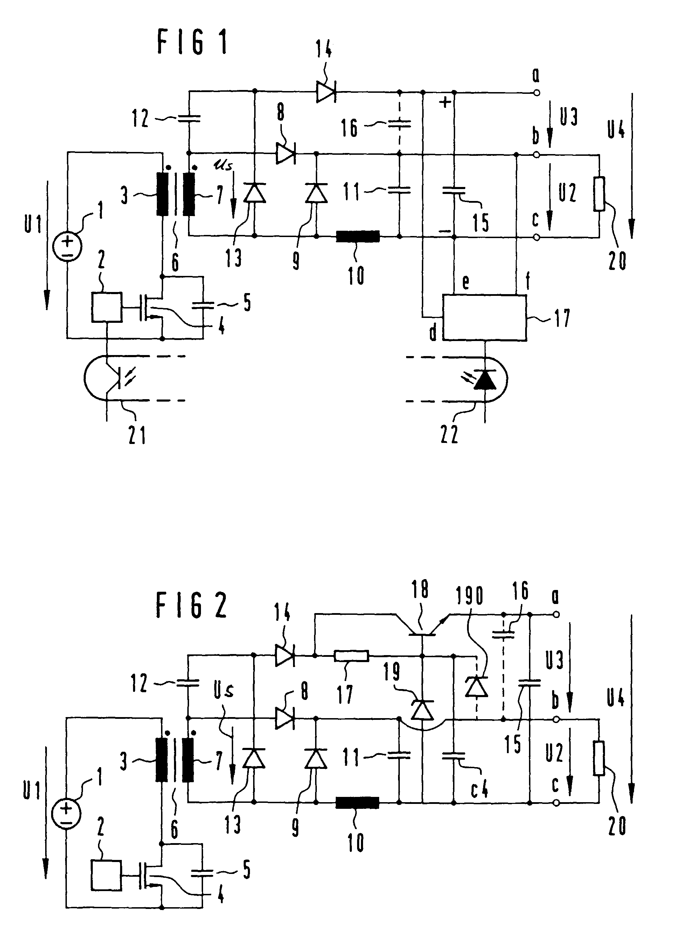

Bei der in Fig. 1 gezeigten Schaltungsanordnung liegt der elektrische Verbraucher 20 am Ausgang b, c des primärgetakteten Eintakt-Durchflußumrichters. Dieser Verbraucher 20 ist insbesondere ein ASIC, d.h. eine anwenderspezifische integrierte Schaltung, die eine Versorgungsspannung unterhalb von 5 V benötigt.

Der primärseitige Hauptstromkreis ist an die Gleichspannungsquelle 1 angeschlossen und verläuft vom Eingang für die Gleichspannung U1 über die Primärwicklung 3 des Transformators 6 und den dazu in Serie liegenden elektronischen Schalter 4. Der elektronische Schalter 4 ist ein Feldeffekttransistor als Leistungsschalter. Parallel zur Drain-Source-Strecke des Feldeffekttransistors 4 liegt der Kondensator 5.

Der sekundärseitige Hauptstromkreis verläuft vom einen Ende der Sekundärwicklung 7 des Transformators 6 über die Gleichrichterdiode 8 zum Ausgangsanschluß b. In einem auf die Gleichrichterdiode 8 folgenden Querzweig ist die Freilaufdiode 9 angeordnet. Die Drossel 10 befindet sich zwischen dem anderen Ende der Sekundärwicklung 7 und dem Ausgangsanschluß c. In einem auf die Drossel 10 folgenden Querzweig befindet sich der Speicherkondensator 11, an dem die Gleichspannung U2 auftritt.

Der elektronische Schalter 4 wird mit Hilfe der taktgesteuerten Steuervorrichtung 2 mit Hilfe von Einschaltimpulsen periodisch leitend gesteuert und bildet das Stellglied einer Regelstrecke. Der Tastgrad der Steuerspannung, die den elektronischen Schalter 4 steuert, ist auf einen vorgegebenen oberen Grenzwert begrenzt. Der obere Grenzwert des Tastgrades der Steuerspannung beträgt vorzugsweise etwa 0,5. Dabei ist unter dem Tastgrad das Verhältnis von Impulsdauer zur Periodendauer zu verstehen.

Die Ausgangsspannung U2 wird mit Hilfe der Regelanordnung 17 auf einen konstanten Wert geregelt. Die Regelanordnung 17 ist mit einem Istwerteingang an den Ausgang b, c des Durchflußumrichters angeschlossen. Die Steuervorrichtung 2 wird über den Optokoppler 21, 22 von der Regelanordnung 17 gesteuert.

Im Hinblick auf den endlichen, nicht vernachlässigbaren Spannungsabfall an der lichtemittierenden Diode 22 des Optokopplers 21, 22 und mit Rücksicht auf die Versorgungsspannung, die von dem insbesondere durch einen Operationsverstärker gebildeten Regler benötigt wird, reicht die Ausgangsspannung U2 des Durchflußumrichters nicht als Hilfsspannung für die Regelanordnung 17 aus.

An die Sekundärwicklung 7 des Übertragers 6 ist zusätzlich zum sekundärseitigen Hauptstromkreis eine Gleichrichterschaltung angeschlossen. Diese Gleichrichterschaltung enthält als Einweggleichrichter die Gleichrichterdiode 13 und den Siebkondensator 12. Der eine Anschluß des Kondensators 12 ist mit dem Anschluß der Sekundärwicklung verbunden, an dem die Gleichrichterdiode 8 des sekundärseitigen Hauptstromkreises liegt. Der andere Anschluß des Kondensators 12 ist über die Gleichrichterdiode 14 an den gegenüber dem Bezugspotential Spannung führenden Anschluß a, c des Hilfsspannungsausgangs a geführt.

Die Hilfsspannung U4 wird unter Mitverwendung der zu regelnden Ausgangsspannung U2 gebildet, und zwar durch Addition der Spannung U3 zur Ausgangsspannung U2. Die Spannung am Kondensator 15 ist die gleichgerichtete Sekundärspannung abzüglich der Spannung an der Drossel 10 und der Spannung an den Gleichrichterdioden 13 und 14. Als Spannung am Kondensator 15 erhält man somit die Abmagnetisierungsspannung vermindert um die Diodenspannungen.

Zwischen dem Anschluß a und dem an Bezugspotential liegenden Anschluß c liegt der Kondensator 15. Die Kapazität des Kondensators 15 ist zweckmäßigerweise wesentlich kleiner als die Kapazität des Kondensators 11. Dabei ergibt sich, daß sich die Hilfsspannung U4 früher aufbaut als die zu regelnde Ausgangsspannung U2. Damit wird die frühzeitige Versorgung der Regelanordnung 17 bei Beginn des Regelvorgangs sowie eine genügende Spannungsreserve für die Regelung gewährleistet. Die vergleichsweise große Hilfsspannung U4 ermöglicht ferner unabhängige und definierte Reglereigenschaften.

Die Hilfsspannung kann gegebenenfalls zusätzlich oder alternativ zur Speisung einer andersartigen Elektronik, insbesondere einer Überwachungsvorrichtung dienen.

An die Stelle des Kondensators 15 kann gegebenenfalls der Kondensator 16 treten, der zwischen den Anschlüssen a und b liegt. Von Vorteil ist dabei, daß der Speicherkondensator 11 des sekundärseitigen Hauptstromkreises als Teil einer am Ausgang der Gleichrichterschaltung liegenden Kapazität mit ausgenutzt wird, indem der Wechselstromanteil der Hilfsspannung U4 über die Serienschaltung der Kondensatoren 16 und 11 zum Bezugspotential abgeleitet wird.

Der Hilfsspannungseingang d, e der Regelanordnung 17 liegt am Ausgang a, c der Gleichrichterschaltung.

Der in Fig. 2 gezeigte Durchflußumrichter stimmt mit dem nach Fig. 1 weitgehend überein. Abweichend ist die Gleichrichterschaltung durch eine Stabilisierungsschaltung ergänzt.

Fig. 2 zeigt einen Durchflußumrichter, bei dem entsprechend Fig. 1 an die Sekundärwicklung 7 des Übertragers 6 zusätzlich zum sekundärseitigen Hauptstromkreis eine Vorrichtung zur Erzeugung der Hilfsspannung U4 angeschlossen ist. Die Gleichrichterdiode 8 liegt mit ihrer Anode am Anfang der Sekundärwicklung 7. Zwischen der Kathode der Gleichrichterdiode 8 und dem Ende der Sekundärwicklung 7 liegt die Freilaufdiode 9. Zwischen der Anode der Freilaufdiode 9 und dem Anschluß c für das Bezugspotential liegt die Drossel 10. Abweichend hiervon kann die Drossel gegebenenfalls im anderen Längszweig des sekundärseitigen Hauptstromkreises liegen.

Die Vorrichtung zur Erzeugung der Hilfsspannung U4 enthält eine Vorrichtung zur Spannungsstabilisierung. Diese Vorrichtung zur Spannungsstabilisierung enthält eine Anordnung mit dem bipolaren Transistor 18. Der npn-Transistor 18 ist mit seinem Kollektor mit der Kathode der Diode 14, mit seinem Emitter an den Kondensator 15 und mit der Basis an die Kathode der Z-Diode 19 angeschlossen. Die Anode der Z-Diode 19 liegt am Anschluß c für das Bezugspotential. Zwischen der Basis und dem Kollektor des Transistors 18 liegt der Widerstand 17. Der dem Emitter des Transistors 18 abgewandte Anschluß des Kondensators 15 liegt an Masse.

An die Stelle des Kondensators 15 kann gegebenenfalls der Kondensator 16 treten, der dann zwischen dem Emitter des Transistors 18 und dem Anschluß b für die Ausgangsspannung U2 liegt.

Der Spitzenwert der Spannung, die in der Sperrphase durch Durchflußumrichter an der Sekundärwicklung 7 auftritt, ist weitgehend unabhängig von der Gleichspannung U1. Der Kondensator 12 lädt sich bei gesperrter Gleichrichterdiode 8 auf diesen Spitzenwert auf. Aus der Spannung am Kondensator 12 wird mit Hilfe der Stabilisierungsschaltung 17, 18, 19 die konstante Hilfsspannung U4 gewonnen. Die Hilfsspannung U4 ergibt sich als Summe aus der konstanten Ausgangsspannung U3, der Zenerspannung der Z-Diode 19 und der Basis-EmitterSchwellenspannung des Transistors 18.

In Abwandlung des Durchflußumrichters nach Fig. 2 kann anstelle der Z-Diode 19 gegebenenfalls die Z-Diode 190 treten. Die Z-Diode 190 liegt dann zwischen der Basis des Transistors 18 und dem Anschluß b für die Ausgangsspannung U2 und hat eine entsprechend der Ausgangsspannung U2 kleinere Zenerspannung als die Z-Diode 19.

Bei dem Durchflußumrichter nach Fig. 2 führt der Anschluß b für die Ausgangsspannung U3 positives Potential gegenüber Masse. Ein Durchflußumrichter mit Erzeugung einer Hilfsspannung U4 für negative Ausgangsspannungen U3 ergibt sich dadurch, daß sämtliche Dioden einschließlich der Z-Diode 19 bzw. 190 die Polarität entgegengesetzt gewählt und ein Transistor 18 vom Typ pnp gewählt wird.

Die Abmagnetisierung des Übertragers wird über den Kondensator 5, der einen Schwingkreis mit der Induktivität der Primärwicklung bildet, sichergestellt. Der Übertrager 6 weist keine zusätzliche Abmagnetisierungswicklung auf. Vorzugsweise ist der Kondensator 5 Teil einer üblichen RCD-Beschaltung am elektronischen Schalter 4. Abweichend kann der Übertrager auf der Sekundärseite abmagnetisiert werden, vorzugsweise mit Hilfe einer parallel zur Gleichrichterdiode liegenden Kapazität. Eine weitere Möglichkeit für die Abmagnetisierung besteht darin, daß sowohl primärseitig als auch sekundärseitig abmagnetisiert wird. Eine Abmagnetisierung mit auf die Eingangsspannung geklemmter Zusatzwicklung würde das Entstehen des Abmagnetisierungsbogens verhindern, der Voraussetzung für die Funktion des zusätzlichen Ausgangskreises ist.

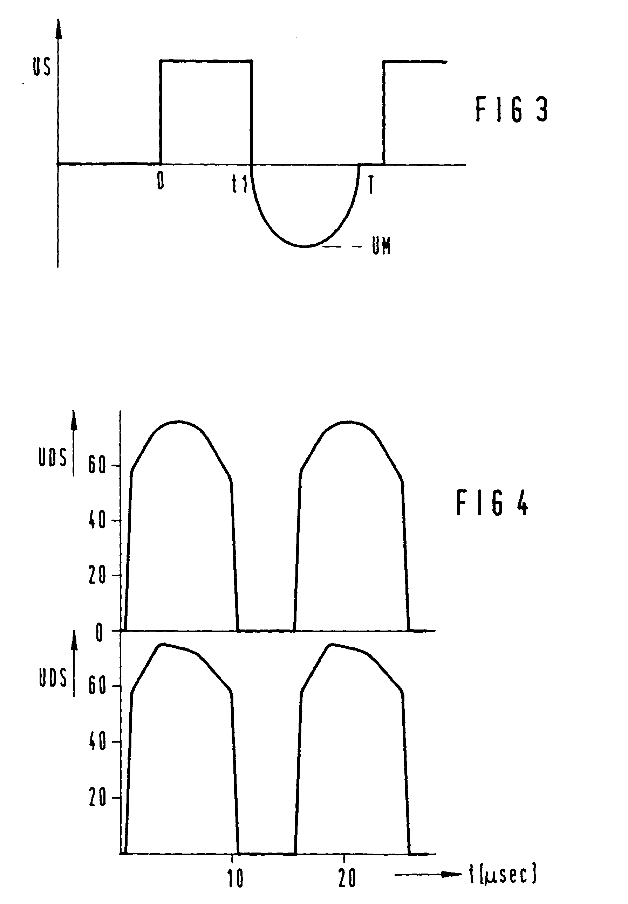

Die auf der Sekundärseite des Übertragers an der Sekundärwicklung 7 anliegende Spannung ist in Fig. 3 dargestellt. Während der Durchlaßphase des elektronischen Schalters 4 liegt die übersetzte Eingangsspannung an der Sekundärwicklung 7 an, während der Sperrphase die übersetzte Abmagnetisierungsspannung UM.

Die Steuerschaltung 2 steuert den elektronischen Schalter 4 mit breitenmodulierten Einschaltimpulsen. Mittels dieser Pulsbreitenmodulation wird die Pulsbreite tl der Einschaltimpulse verändert. Die Einschaltdauer tl variiert vorzugsweise im Bereich von 0...0.5 · T, wobei T die Periodendauer der Einschaltimpulse ist.

Für die Ausgangsspannung U2 des Durchflußumrichters gilt näherungsweise:

$$U2 = t1 \cdot US = t1 \cdot \ddot{u} \cdot UE,$$

wobei ü das Übersetzungsverhältnis der Quotient aus Sekundärwindungszahl und Primärwindungszahl und US die übersetzte Eingangsspannung ist.

Zur Erzeugung der Hilfsspannung U4 wird die übersetzte Abmagnetisierungsspannung ausgenutzt. Die Induktivität der Primärwicklung 3 des Übertragers und die Kapazität des Kondensators 5 bilden einen Schwingkreis. Dies führt zu einer sinusförmigen Abmagnetisierungsspannung.

Für die Abmagnetisierung gilt:

$$\int_0^{t1} U1(t)^* \, dt = \int_{t1}^{T} UM(t)^* \, dt$$

Die Höhe des Abmagnetisierungsbogens ist somit unabhängig von der Eingangsspannung U1, da die Spannungs-Zeitfläche gleichbleibt. Bei höherer Eingangsspannung U1 wird die Einschaltzeit t1 kleiner. Die Breite des Abmagnetisierungsbogens ist durch die Schwingkreiskonstante L3 · C5 gegeben, wobei L3 die Primärinduktivität des Übertragers und C5 die Kapazität des Kondensators 5 ist.

Der Scheitelwert UMS der Abmagnetisierungspannung UM errechnet sich zu

$$UMS = U1/(4 \cdot f \cdot \sqrt{L3 \cdot C5}),$$

wobei f die Schaltfrequenz ist.

In der Abmagnetisierungsphase wird dem Ubertrager 6 Energie entzogen. Die im Übertrager 6 gespeicherte magnetische Energie EM ist mit I als dem maximalen Primärstrom bezeichnet.

$$EM = 1/2 \cdot L3 \cdot I^2$$

Mit

$$I = (UE/L) \cdot d \cdot T$$

ergibt sich

$$EM = 1/2 \cdot (U1^2/L) \cdot d^2 \cdot T^2,$$

wobei d die Pulsbreite $d \cdot T = t1$, T die Periodendauer, U1 die Eingangsspannung ist.

Teilt man EM durch die Periodendauer, erhält man die Leistung PM:

$$PM = EM/T = 1/2 \cdot (U1^2/L) \cdot d^2 \cdot T.$$

Bei einem bevorzugten Bemessungsbeispiel betragen
U1 = 40V, d = 0.4, L3 = 1mH und T = 16.6µs.
Hieraus resultiert P = 2.1W.

Berücksichtigt man noch interne Verluste, so können etwa 70-80% dieser Energie am Ausgang a,c des weiteren Ausgangskreises entnommen werden. Im Leerlauf sind typisch noch 25% der maximalen Energie verfügbar.

Wird mehr Energie für die Hilfsspannung U4 benötigt, so wird die im Übertrager gespeicherte magnetische Energie vergrößert. Dies erreicht man durch Einschleifen eines entsprechend dimensionierten Luftspaltes, wodurch die Primärinduktivität L3 verkleinert wird.

Entzieht man dem Übertrager in der Sperrphase Energie, so wird der Abmagnetisierungsbogen aus Fig. 3 gekappt. Fig. 4 zeigt im oberen Teil den Abmagnetisierungsbogen für den Fall fehlender Belastung des zusätzlichen Ausgangskreises und im unteren Teil den gekappten Abmagnetisierungsbogen bei belastetem zusätzlichen Ausgangskreis. Die Spannungsbeanspruchung des Transistors 17 wird somit verringert.

Bei einer Ausgangsspannung U2 = 5V beträgt die Hilfsspannung U4 etwa 17 V, bei einer Ausgangsspannung U2 = 3V etwa 10V.

Die in den Figuren 1 und 2 gezeigten Durchflußumrichter sind vorzugsweise so bemessen, daß die Ausgangsspannung U3 jeweils kleiner als 5 V ist und die Hilfsspannung U4 jeweils mindestens 5 V beträgt.

**Patentansprüche**

1. Durchflußumrichter mit einem in einem primärseitigen Hauptstromkreis in Serie zu einer Primärwicklung (3) eines Übertragers (6) liegenden, mittels einer Steuervorrichtung (2) steuerbaren elektronischen Schalter (4) und zum Schalter parallel geschalteten Kondensator (5), mit einem an eine Sekundärwicklung (7) des Übertragers (6) angeschlossenen sekundärseitigen Hauptstromkreis, der eine in einem Längszweig angeordnete Gleichrichterdiode (8), eine in einem Querzweig liegende Freilaufdiode (9), eine in einem Längszweig angeordnete Drossel (10) und einen parallel zum Ausgang liegenden Kondensator (11) enthält, wobei an die Sekundärwicklung (7) des Übertragers (6) zusätzlich zum sekundärseitigen Hauptstromkreis ein weiterer Ausgangskreis angeschlossen ist, der einen über eine Gleichrichterdiode (13) an die Sekundärwicklung (7) angeschlossenen ersten Kondensator (12) und eine parallel zu seinem Ausgang liegende Kondensatoranordnung (15) enthält und wobei der erste Kondensator (12) in der Sperrphase des Durchflußumrichters aus dem Übertrager (6) Energie aufnimmt,
**dadurch gekennzeichnet,**
daß der erste Kondensator (12) des weiteren Ausgangskreises an den Verbindungspunkt der Sekundärwicklung (7) mit der Gleichrichterdiode (8) des sekundärseitigen Hauptstromkreises angeschlossen ist und daß bei dem weiteren Ausgangskreis zwischen der Verbindung der Gleichrichterdiode (13) mit dem ersten Kondensator (12) einerseits und dem Ausgang (a) andererseits eine zweite, in bezug auf die am ersten Kondensator (12) liegende Spannung in Durchlaßrichtung gepolte Diode (14) angeordnet ist.

2. Durchflußumrichter nach Anspruch 1,
**dadurch gekennzeichnet,**
daß die Ausgangsspannung des Durchflußumrichters mit Hilfe des durch die Steuervorrichtung (2) steuerbaren elektronischen Schalters (4) auf einen konstanten Wert geregelt ist.

3. Durchflußumrichter nach Anspruch 1 oder 2,
**dadurch gekennzeichnet,**
daß in Serie zum Ausgang (b, c) des Durchflußumrichters ein Kondensator (16) liegt, dessen einer Anschluß mit dem gegenüber Bezugspotential Spannung (U3) führenden Anschluß (b) des Durchflußumrichter-Ausganges (b, c) verbunden ist und dessen anderer Anschluß an den der ersten Diode (13) abgewandten Anschluß der zweiten Diode (14) geführt ist.

4. Durchflußumrichter nach einem der Ansprüche 1 bis 3,
**dadurch gekennzeichnet,**
daß am Ausgang (b, c) des Durchflußumrichters ein Kondensator (16) liegt, dessen einer Anschluß mit dem Bezugspotential verbunden ist und dessen anderer Anschluß an den der ersten Diode (13) abgewandten Anschluß der zweiten Diode (14) geführt ist.

5. Durchflußumrichter nach einem der Ansprüche 1 bis 4,
**dadurch gekennzeichnet,**
daß zwischen der zweiten Diode (14) und dem Ausgang des weiteren Ausgangskreises die Kollektor-Emitterstrecke eines Transistors (18) liegt, und daß zwischen der Basis des Transistors und einem Bezugspotential eine Z-Diode (19) angeordnet ist.

6. Durchflußumrichter nach Anspruch 5,
**dadurch gekennzeichnet**,
daß zwischen dem Kollektor und der Basis des Transistors (18) ein Widerstand (17) liegt.

7. Durchflußumrichter nach einem der Ansprüche 1 bis 6,
**dadurch gekennzeichnet**,
daß die Ausgangsspannung des Durchflußumrichters kleiner als 5 V ist und die Hilfsspannung mindestens 5 V beträgt.

8. Durchflußumrichter nach einem der Ansprüche 1 bis 7,
**dadurch gekennzeichnet**,
daß der Durchflußumrichter eine an den Sekundärkreis angeschlossene Elektronik (16) enthält, deren Versorgungsspannungseingang an den Ausgang des weiteren Ausgangskreises angeschlossen ist.

9. Durchflußumrichter nach einem der vorhergehenden Ansprüche,
**dadurch gekennzeichnet**,
daß der Kern des Übertragers (6)) einen Luftspalt aufweist.

**Claims**

1. Forward converter having an electronic switch (4), which is connected in series in a primary-side main circuit with a primary winding (3) of a transformer (6) and can be controlled by means of a control device (2), and a capacitor (5) connected in parallel with the switch, having a secondary-side main circuit, which is connected to a secondary winding (7) of the transformer (6) and which contains a rectifier diode (8) arranged in a direct-axis arm, a freewheeling diode (9) connected in a quadrature-axis arm, an inductor (10) arranged in a direct-axis arm, and a capacitor (11) connected in parallel with the output, there being connected to the secondary winding (7) of the transformer (6), in addition to the secondary-side main circuit, an auxiliary output circuit, which contains a first capacitor (12), connected to the secondary winding (7) via a rectifier diode (13), and a capacitor arrangement (15) connected in parallel with the output of said capacitor, and the first capacitor (12) absorbing energy from the transformer (6) in the blocking phase of the forward converter, characterized in that the first capacitor (12) of the auxiliary output circuit is connected to the tie point of the secondary winding (7) with the rectifier diode (8) of the secondary-side main circuit, and that in the case of the auxiliary output circuit there is arranged between the connection of the rectifier diode (13) to the first capacitor (12), on the one hand, and the output (a) on the other hand, a second diode (14), which is polarized in the forward direction with respect to the voltage present across the first capacitor (12).

2. Forward converter according to Claim 1, characterized in that the output voltage of the forward converter is controlled to a constant value with the aid of the electronic switch (4) which can be controlled by the control device (2).

3. Forward converter according to Claim 1 or 2 characterized in that there is connected in series with the output (b, c) of the forward converter a capacitor (16), one of whose terminals is connected to the terminal (b) of the forward converter output (b, c) which carries a voltage (V3) relative to a reference potential, and whose other terminal is connected to the terminal of the second diode (14) which is averted from the first diode (13).

4. Forward converter according to one of Claims I to 3, characterized in that connected to the output (b, c) of the forward converter is a capacitor (16), one of whose terminals is connected to the reference potential and whose other terminal is connected to the terminal of the second diode (14) which is averted from the first diode (13).

5. Forward converter according to one of Claims 1 to 4, characterized in that the collector-emitter path of a transistor (18) is connected between the second diode (14) and the output of the auxiliary output circuit, and in that a Z diode (19) is arranged between the base of the transistor and a reference potential.

6. Forward converter according to Claim 5, characterized in that a resistor (17) is connected between the collector and the base of the transistor (18).

7. Forward converter according to one of Claims 1 to 6, characterized in that the output voltage of the forward converter is lower than 5 V, and the auxiliary voltage is at least 5 V.

8. Forward converter according to one of Claims 1 to 7, characterized in that the forward converter contains an electronic circuit (16) which is connected to the secondary circuit and whose supply voltage input is connected to the output of the auxiliary output circuit.

9. Forward converter according to one of the preceding claims, characterized in that the core of the transformer (6) has an air gap.

## Revendications

1. Convertisseur direct comportant un interrupteur (4) électronique, qui se trouve dans un circuit de courant principal du côté primaire en série avec un enroulement (3) primaire d'un transformateur (6) et qui peut être commandé au moyen d'un dispositif (2) de commande et un condensateur (5) branché en parallèle avec l'interrupteur, un circuit de courant principal du côté secondaire, qui est connecté à un enroulement secondaire (7) du transformateur (6), qui comprend une diode redresseuse (8) disposée dans une branche longitudinale, une diode (9) de roue libre se trouvant dans une branche transversale, une bobine (10) disposée dans une branche longitudinale et un condensateur (11) se trouvant en parallèle avec la sortie, un circuit de sortie supplémentaire, qui comprend un premier condensateur (12) connecté à l'enroulement secondaire (7) par l'intermédiaire d'une diode redresseuse (13) et un dispositif (15) de condensateur se trouvant en parallèle avec sa sortie étant connecté à l'enroulement secondaire (7) du transformateur (6) en supplément du circuit de courant principal du côté secondaire, et le premier condensateur (12) recevant de l'énergie du transformateur (6) pendant la phase de blocage du convertisseur direct,
caractérisé en ce que
le premier condensateur (12) du circuit de sortie supplémentaire est connecté au point de liaison de l'enroulement (7) secondaire avec la diode (8) redresseuse du circuit de courant principal du côté secondaire et une seconde diode (14) polarisée dans le sens passant par rapport à la tension appliquée au premier condensateur (12) est disposée dans le circuit de sortie supplémentaire entre la liaison de la diode (13) redresseuse avec le premier condensateur (12) d'une part et la sortie (a) d'autre part.

2. Convertisseur direct suivant la revendication 1, caractérisé en ce que,
la tension de sortie du convertisseur direct est régulée à une valeur constante à l'aide de l'interrupteur (4) électronique pouvant être commandé par le dispositif (2) de commande.

3. Convertisseur direct suivant la revendication 1 ou 2, caractérisé en ce que
un condensateur (16), dont une borne est reliée à la borne (b) de la sortie (b, c,) de convertisseur direct conduisant une tension (U3) par rapport au potentiel de référence et dont l'autre borne est reliée à la borne de la seconde diode (14) éloignée de la première diode (13), est disposé en série avec la sortie (b, c) du convertisseur direct.

4. Convertisseur direct suivant l'une des revendications 1 à 3,

caractérisé en ce que
un condensateur (16), dont une borne est reliée au potentiel de référence et dont l'autre borne est reliée à la borne de la seconde diode (14) éloignée de la première diode (13), est relié à la sortie (b, c) du convertisseur direct.

5. Convertisseur direct suivant l'une des revendications 1 à 4,
caractérisé en ce que
la voie collecteur-émetteur d'un transistor (18) se trouve entre la seconde diode (14) et la sortie du circuit de sortie supplémentaire, et une diode Zener (19) est disposée entre la base du transistor et un potentiel de référence.

6. Convertisseur direct suivant la revendication 5, caractérisé en ce que
une résistance (17) se trouve entre le collecteur et la base du transistor (18).

7. Convertisseur direct suivant l'une des revendications 1 à 6,
caractérisé en ce que
la tension de sortie du convertisseur direct est inférieure à 5 V et la tension auxiliaire représente au moins 5 V.

8. Convertisseur direct suivant l'une des revendications 1 à 7,
caractérisé en ce que
le convertisseur direct comprend un dispositif électronique (16) connecté au circuit secondaire, dont l'entrée de tension d'alimentation est connectée à la sortie du circuit de sortie supplémentaire.

9. Convertisseur direct suivant l'une des revendications précédentes,
caractérisé en ce que
le noyau du transformateur (6) comporte un entrefer.

FIG 1

FIG 2

FIG 3

FIG 4

t [µsec]